# EUROPÄISCHE PATENTANMELDUNG

(11) **EP 2 093 170 A1**
(43) Veröffentlichungstag der Anmeldung: **26.08.2009**
(21) Anmeldenummer: 09000848.3
(22) Anmeldetag: 22.01.2009
(51) Int. Cl.: B65G 47/82

(54) **Verfahren zum separieren einer Anzahl von Vials aus einer Vielzahl von in mehreren Reihen angeordneten Vials und Vorrichtung hierfür**

(30) Priorität: 19.02.2008 DE 102008009993
(71) Anmelder: ACCURRO GmbH, 35112 Fronhausen (DE)
(72) Erfinder: Battenberg, Ralf, 35112 Fronhausen (DE); Wagner, Alexander, 35102 Lohra (DE)
(74) Vertreter: Walther, Walther & Hinz GbR

(57) **Zusammenfassung**

Gegenstand der Erfindung ist ein Verfahren zum Separieren einer Anzahl von Vials (116) aus einer Vielzahl von in mehreren Reihen angeordneten Vials (116), wobei die in mehreren Reihen angeordneten Vials (116) zunächst auf eine Übergabeebene (110) bewegt werden und dann derart weiter über die Übergabeebene (110) hinaus bewegt werden, dass die zum Separieren vorgesehenen Vials (116) über die Übergabeebene (110) auf eine sich an die Übergabeebene (110) anschließende Abstellfläche (128) gelangen und dass die übrigen Vials (116) auf der Übergabeebene (110) verbleiben. Ein Verfahren der eingangs genannten Art zu schaffen, bei dem ein geordneter und vollständiger Abtransport der Vials gewährleistet ist, ohne dass einzelne Vials umfallen wird dadurch erreicht, dass anschließend die noch auf der Übergabeebene (110) befindlichen, aber an die Abstellfläche (128) angrenzenden Vials (116) derart angehoben werden oder dass die Abstellfläche (128) derart abgesenkt wird, dass die auf der Übergabeebene (110) verbleibenden Vials (116) die Abstellfläche (128) nicht mehr berühren.

## Beschreibung

Die vorliegende Erfindung betrifft ein Verfahren zum Separieren einer Anzahl von Vials gemäß dem Oberbegriff des Anspruches 1 und eine Vorrichtung zur Durchführung dieses Verfahrens gemäß dem Oberbegriff der Ansprüche 5 und 6.

Aus der DE 10 2005 019 985 A1 ist eine Vorrichtung zum Separieren und zum kontrollierten Abführen einer Anzahl von Vials bekannt, bei der eine Vielzahl von im mehreren Reihen angeordnete Vials mittels eines Entladeschiebers auf eine Übergabeebene geschoben werden. Dort ergreift ein Transportmittel die in der ersten Reihe stehenden Vials und transportiert diese auf ein Abförderband, von wo die Vials zur weiteren Bearbeitung abtransportiert werden.

Hierzu wird ein aus einem dünnen Blech gebildetes Transportmittel unter die vorderste Reihe der auf einer Übergabeebene abgestellten Vials geschoben, dann werden die Vials durch das Transportmittel angehoben und auf ein Abförderband überführt, bevor ein Puscher an die Vials herangeführt wird und bevor das Transportmittel unter den Vials weggezogen wird, wobei die Vials gegen den Puscher gedrückt und an einem Umfallen gehindert werden.

Beim Verschieben der Vials werden Vials unterschiedlicher Reihen gegeneinander gedrückt und es bilden sich kleine Lücken, in die ein Vial einer anderen Reihe teilweise hineingelangt. Beim Untergreifen der Vials durch das Transportmittel kann es dann vorkommen, dass das Transportmittel ein Vial nur teilweise untergreift oder dass ein Teil eines Vials aus einer anderen Reihe mit auf das Transportmittel gelangt. Beim Anheben des Transportmittels kann schon mal ein Vial umfallen und ist dann nicht mehr zu gebrauchen.

Bei einem anderen Verfahren zum Separieren von Vials werden die in mehreren Reihen angeordneten Vials so weit über eine Übergabeebene geschoben, dass die zu separierenden Vials auf eine Abstellfläche, insbesondere auf ein Abförderband gelangen. Auch hier werden die einzelnen Vials derart gegeneinander verschoben, dass einzelne Vials teilweise in benachbarte Reihen hineinreichen. Wird nun das Abförderband angefahren, um die darauf befindlichen Vials abzutransportieren, so kann es vorkommen, dass teilweise auf dem Abförderband stehende Vials der nächsten, nicht abzutransportierenden Reihe, zumindest mitbewegt werden. Stossen dann abzutransportierende Vials an diese unerwünschterweise teilweise auf dem Abförderband stehenden Vials an, so kann es vorkommen, dass dabei ein Vial umfällt und nicht mehr zu gebrauchen ist.

Der Verlust eines Vials ist unter anderem auch deshalb unerwünscht, weil hierdurch die relative Position der einzelnen Vials zueinander verändert wird, so dass die gesamte Dokumentation durcheinander gerät.

Davon ausgehend liegt der vorliegenden Erfindung die Aufgabe zu Grunde, ein Verfahren und eine Vorrichtung der eingangs genannten Art zu schaffen, bei dem ein geordneter und vollständiger Abtransport der Vials gewährleistet ist, ohne dass einzelne Vials umfallen.

Als technische Lösung dieser Aufgabe wird erfindungsgemäß ein Verfahren mit den Merkmalen des Anspruches 1 und eine Vorrichtung mit den Merkmalen des Anspruches 5 oder 6 vorgeschlagen. Vorteilhafte Weiterbildungen dieses Verfahrens und dieser Vorrichtungen sind den jeweiligen Unteransprüchen zu entnehmen.

Ein nach dieser technischen Lehre ausgeführtes Verfahren und eine nach dieser technischen Lehre ausgeführte Vorrichtung haben den Vorteil, dass nur diejenigen Vials auf der Abstellfläche stehen, die auch abtransportiert werden sollen und dass die anderen Vials keinen Kontakt zum Abförderband haben. Beim Anfahren des Abförderbandes werden dann nur die abzutransportierenden Vials bewegt und die anderen Vials werden nicht mehr mitgenommen. Somit wirken auf die verbleibenden Vials viel weniger Kräfte beim Anfahren des Abförderbandes, wodurch ein Umfallen eines einzelnen Vials vermieden wird.

Bei einer Vorrichtung mit einem Transportmittel hat die hier vorgeschlagene technische Lehre den Vorteil, dass durch das Anheben der an die Abstellfläche angrenzenden Vials das Transportmittel nur noch die zu separierenden Vials erfasst und dass somit ein Umfallen eines verbleibenden Vials verhindert wird.

Werden dabei die an die Abstellfläche angrenzenden Vials beispielsweise durch Anheben oder Verschwenken der Übergabeebene angehoben, so hat dies den Vorteil, dass dann die dem Abförderband zugewandte Kante der Übergabeebene einen Anschlag bildet, so dass beim Untergreifen des dünnen Transportmittels unter die Vials ein Verschieben der Vials in Richtung der Übergabeebene verhindert wird. Durch diesen Anschlag werden einerseits sämtliche Vials in einer Linie ausgerichtet und andererseits wird ein Wegrutschen der Vials in andere Reihen verhindert. Somit ist sichergestellt, dass sämtliche Vials der auf der Pufferfläche befindlichen Reihe auch vom Transportmittel erfasst und auf dem Abförderband abgestellt werden. Diese Sicherheit ist insbesondere für die Dokumentation wichtig, damit der Gefriertrocknungsprozess ordnungsgemäß und den gesetzlichen Vorschriften entsprechend auch dokumentiert werden kann.

In einer alternativen Ausführungsform werden nur die unmittelbar an der Abstellfläche befindlichen Vials angehoben. Hierzu ist zwischen der Übergabeebene und der Abstellfläche eine Hebevorrichtung, beispielsweise ein Schwert, vorgesehen. Dieses Schwert greift an dem Teil der Vials an, der über die Übergabeebene hervorsteht und hebt damit diese entsprechenden Vials an, so dass diese Vials von der Abstellfläche abgehoben werden.

In einer vorteilhaften Weiterbildung ist die Übergabeebene zweigeteilt, so dass ein Teil der Übergabeebene starr montiert und unverändert bleibt, während der andere, der an die Pufferfläche angrenzende Teil, schwenkbar gelagert ist, damit eine dem Transportmittel zugewandte Kante dieses Teils der Übergabeebene entsprechend anhoben werden kann, um als Anschlag für die Vials zu fungieren.

In einer bevorzugten Ausführungsform ist oberhalb der Abstellfläche eine Lichtschranke angeordnet, die das Eintreffen der Vials detektiert. Dabei werden die aus der Gefriertrocknungsanlage kommenden Vials mittels eines großen Schiebers auf die Übergangsebene bewegt, bis die vorderste Reihe durch die Lichtschranke detektiert wird. Dann wird die Bewegung der sämtlichen Vials eingestellt, und weil die Pufferfläche so dimensioniert ist, dass hier eine einzige Reihe von Vials Platz findet, kann anschließend die dem Abförderband zugewandte Kante der Übergangsebene angehoben werden, um ein Untergreifen der Vials durch das Transportmittel zu ermöglichen.

Weitere Vorteile des erfindungsgemäßen Verfahrens und der erfindungsgemäßen Vorrichtungen ergeben sich aus der beigefügten Zeichnung und den nachstehend beschriebenen Ausführungsformen. Ebenso können die vor-stehend genannten und die noch weiter ausgeführten Merkmal erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine geschnitten dargestellte, schematische Seitenansicht einer ersten Ausführungsform einer erfindungsgemäßen Vorrichtung zu einem ersten Zeitpunkt, geschnitten entlang Linie I-I in Fig. 2;
- Fig. 2: eine Draufsicht auf die Vorrichtung gemäß Fig. 1;
- Fig. 3: die Vorrichtung gemäß Fig. 1 zu einem zweiten Zeitpunkt;
- Fig. 4: eine Detailvergrößerung der Vorrichtung gemäß Fig. 3 entlang Linie IV in Fig. 3;

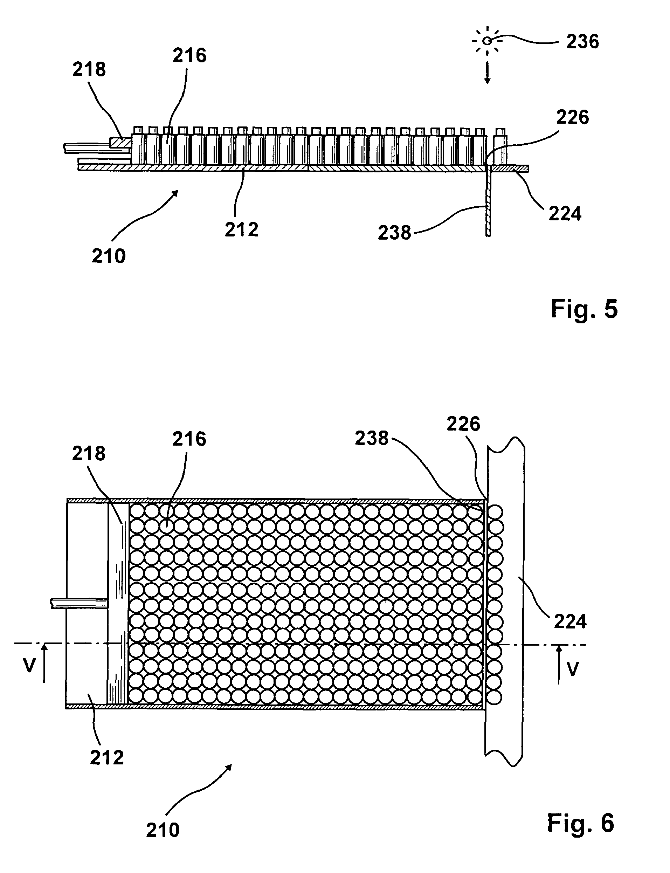

- Fig. 5: eine geschnitten dargestellte, schematische Seitenansicht einer zweiten Ausführungsform einer erfindungsgemäßen Vorrichtung zu einem ersten Zeitpunkt, geschnitten entlang Linie V-V in Fig. 6;
- Fig. 6: eine Draufsicht auf die Vorrichtung gemäß Fig. 5;

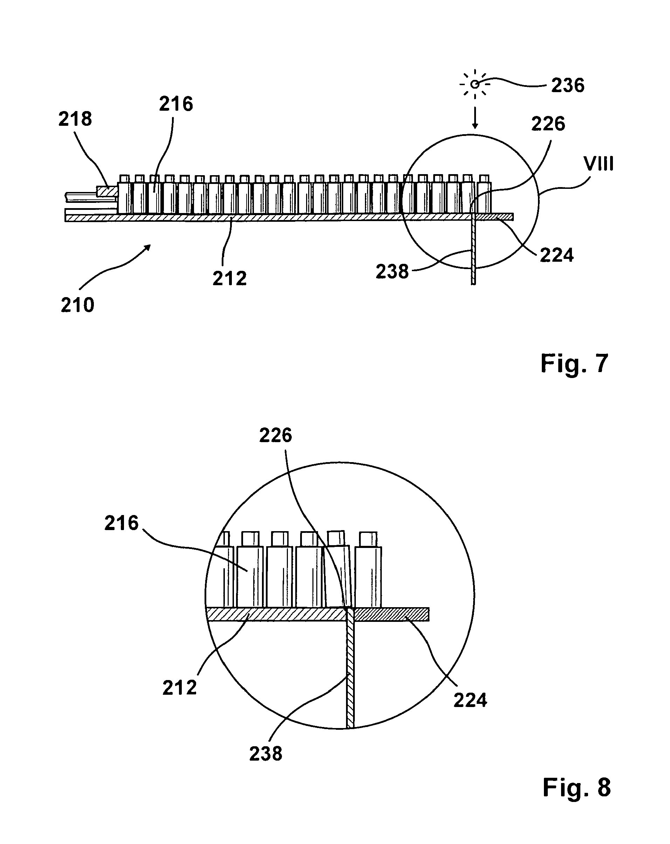

- Fig. 7: die Vorrichtung gemäß Fig. 5 zu einem zweiten Zeitpunkt;
- Fig. 8: eine Detailvergrößerung der Vorrichtung gemäß Fig. 7 entlang Linie VIII in Fig. 7;
- Fig. 9: eine geschnitten dargestellte, schematische Seitenansicht einer dritten Ausführungsform einer erfindungsgemäßen Vorrichtung zu einem ersten Zeitpunkt;
- Fig. 10: die Vorrichtung gemäß Fig. 9 zu einem zweiten Zeitpunkt;
- Fig. 11: die Vorrichtung gemäß Fig. 9 zu einem dritten Zeitpunkt;
- Fig. 12: die Vorrichtung gemäß Fig. 9 zu einem vierten Zeitpunkt;
- Fig. 13: die Vorrichtung gemäß Fig. 9 zu einem fünften Zeitpunkt;
- Fig. 14: die Vorrichtung gemäß Fig. 9 zu einem sechsten Zeitpunkt;
- Fig. 15: die Vorrichtung gemäß Fig. 9 zu einem siebten Zeitpunkt.
- Fig. 16: eine geschnitten dargestellte, schematische Seitenansicht einer vierten Ausführungsform einer erfindungsgemäßen Vorrichtung zu einem ersten Zeitpunkt;
- Fig. 17: die Vorrichtung gemäß Fig. 16 zu einem zweiten Zeitpunkt;
- Fig. 18: die Vorrichtung gemäß Fig. 16 zu einem dritten Zeitpunkt;
- Fig. 19: die Vorrichtung gemäß Fig. 16 zu einem vierten Zeitpunkt;
- Fig. 20: die Vorrichtung gemäß Fig. 16 zu einem fünften Zeitpunkt.

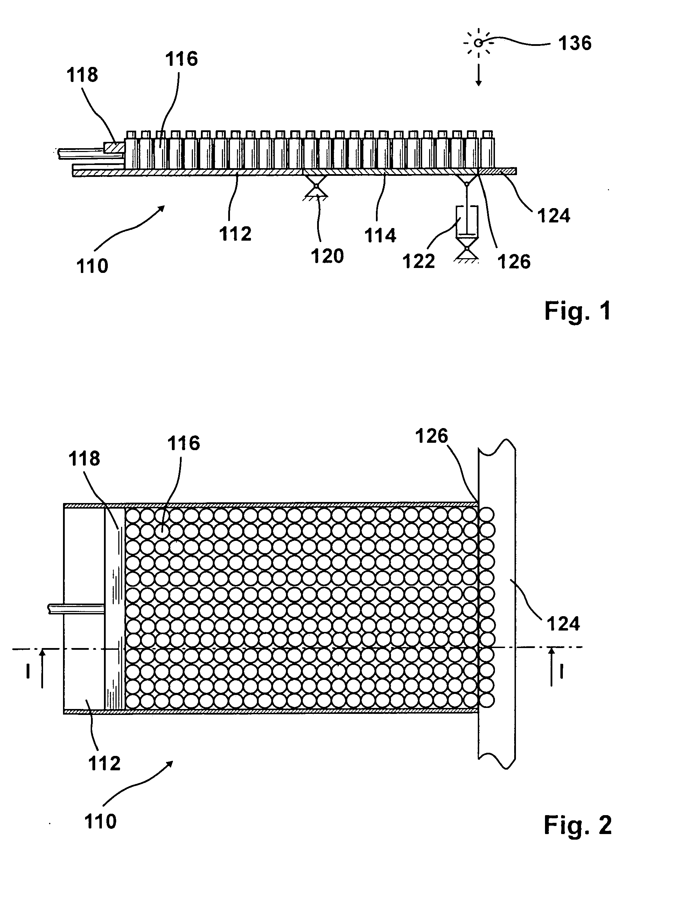

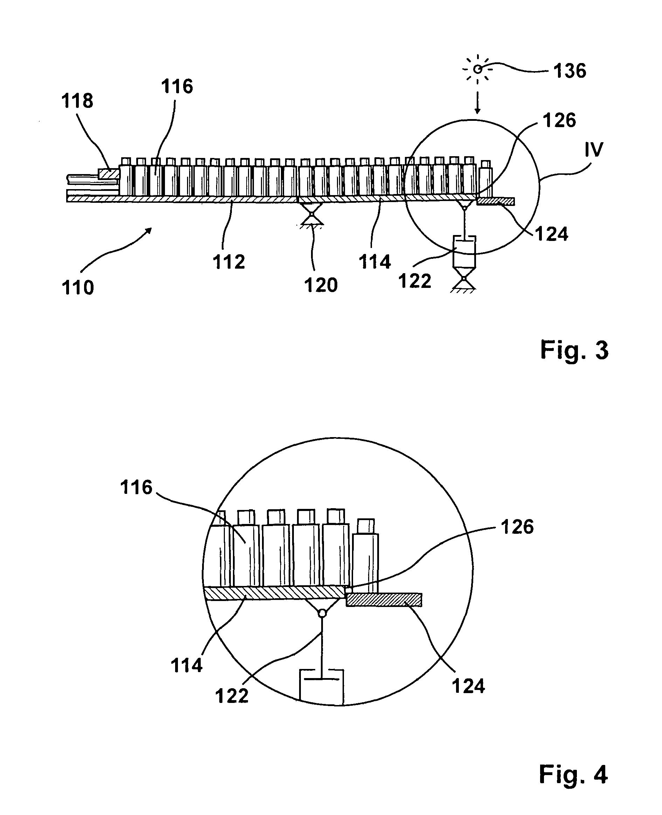

In den Fig. 1 bis 4 ist in schematischer Darstellung eine erste Ausführung einer Vorrichtung zum Separieren einer Anzahl von Vials aus einer Vielzahl von in mehreren Reihen angeordneten Vials dargestellt, die eine zweiteilige Übergabeebene 110 mit einem ersten starren Teil 112 und einem zweiten, verschwenkbar gelagerten Teil 114 umfasst. Unmittelbar an diese Übergabeebene 110 schließt sich ein Abförderband 124 an, auf dem die Vials 116 zur weiteren Bearbeitung abtransportiert werden können.

Zunächst werden die Vials 116 mittels eines Entladeschiebers 118 auf die Übergabeebene 110 geschoben und die Vials 116 werden so lange weitergeschoben, bis die vorderste Reihe der Vials 116 auf dem Abförderband 124 zu stehen kommen. Dies wird durch eine Lichtschranke 136 erkannt, wobei diese Lichtschranke 136 dann ein Signal an den Entladeschieber 118 gibt um den Entladeschieber 118 zu stoppen. Danach wird das auf dem Gelenk 120 und dem Hubkolben 122 gelagerte Teil 114 der Übergabeebene 110 durch Ausfahren des Hubkolbens 122 derart verschwenkt, dass eine dem Abförderband 124 zugewandte Kante 126 des Teils 114 um etwa 2 mm angehoben wird.

Wie insbesondere aus Fig. 2 zu erkennen ist, sind die Vials 116 reihenweise angeordnet. Die Breite der Übergabeebene 110 ist so gewählt, dass eine genau bestimmte Anzahl von Vials 116 in eine Reihe passt. Allerdings sind die einzelnen Vials 116 aufgrund fertigungsbedingter Toleranzen nicht exakt gleich groß, so dass die jeweiligen Reihen von Vials 116 unterschiedlich lang sind. Beim Verschieben der Vielzahl von Vials 116 durch den Entladeschieber 118 kann es nun vorkommen, dass Vials 116 benachbarter Reihen nicht mittig aneinander stoßen, sondern leicht versetzt aneinander stoßen. Mit anderen Worten, es kommt vor, dass einzelne Vials 116 in kleinere Lücken zwischen Vials 116 benachbarter Reihen gelangen mit der Folge, dass beispielsweise die nah am Abförderband 124 stehende Reihe von Vials dann teilweise auf dem Abförderband 124 zum Stehen kommt, wenn bereits sämtliche zu separierenden Vials 116 auf dem Abförderband 124 sind. Würde nun das Abförderband 124 in Bewegung gesetzt, so würden auf diesen Teil der überstehenden Vials 116 Kräfte wirken, die möglicherweise zum Umfallen einzelner Vials 116 führen könnten. Aus diesem Grunde wird der Teil 114 der Übergabeebene 110 mittels des Hubkolbens 122 so weit angehoben (vorzugsweise 2 mm), dass die noch auf der Übergabeebene 110 befindlichen Vials 116 vom Abförderband 124 abgehoben werden und dieses nicht mehr berühren. Wird nun das Abförderband 124 zum Abtransport der separierten Vials 116 eingeschaltet, so können vom Abförderband 124 keine Kräfte mehr auf die Vials 116 auf der Übergabeebene 110 wirken.

Da die auf der Übergabeebene 110 befindlichen Vials, je nach Größe des Vials, nur maximal 3 mm über die Übergabeebene hinaus ragen, ist es den separierten, auf dem Abförderband 124 befindlichen Vials 116 beim Abtransport möglich, an den auf der Übergabeebene 110 befindlichen Vials 116 vorbei zu gleiten, ohne dass Vials 116 umfallen.

In einer zweiten Ausführungsform einer erfindungsgemäßen Vorrichtung zum Separieren einer Anzahl von Vials werden die Vials 216 ebenfalls über einen Entladeschieber 218 auf eine Übergabeebene 210 geschoben, bis eine erste Reihe von Vials 216 auf einem Abförderband 224 zum Stehen kommt. Dieses wird von einer Lichtschranke 236 detektiert, die dann den Entladeschieber 218 entsprechend stoppt. Es versteht sich, dass in dieser Ausführungsform eine Vorderkante 226 der Übergabeebene 210 bündig mit dem Abförderband 224 ausgerichtet ist.

Zwischen der Übergabeebene 210 und dem Abförderband 224 ist in dieser Ausführungsform eine als Schwert 238 ausgeführte Hebevorrichtung installiert. Dieses Schwert 238 ist vertikal verschiebbar angeordnet, wobei die nach oben orientierte Schneide des Schwertes im Ruhezustand bündig mit der Oberseite der Übergabeebene 210 beziehungsweise mit der Oberseite des Abförderbandes 224 ausgerichtet ist.

Sind nun alle Vials 216 derart in Position, dass die abzufördernden Vials 216 auf dem Abförderband 224 stehen, so wird das Schwert 238 um etwa 0,5 mm bis 20 mm, vorzugsweise 2 mm, nach oben bewegt und hebt dabei die über die Übergabeebene 210 hinaus ragenden Vials 216 an, so dass diese Vials 216 keine Berührung mit dem Abförderband 224 mehr haben.

Nun kann das Abförderband 224 in Bewegung gesetzt werden und die separierten Vials 216 zur weiteren Bearbeitung abtransportieren.

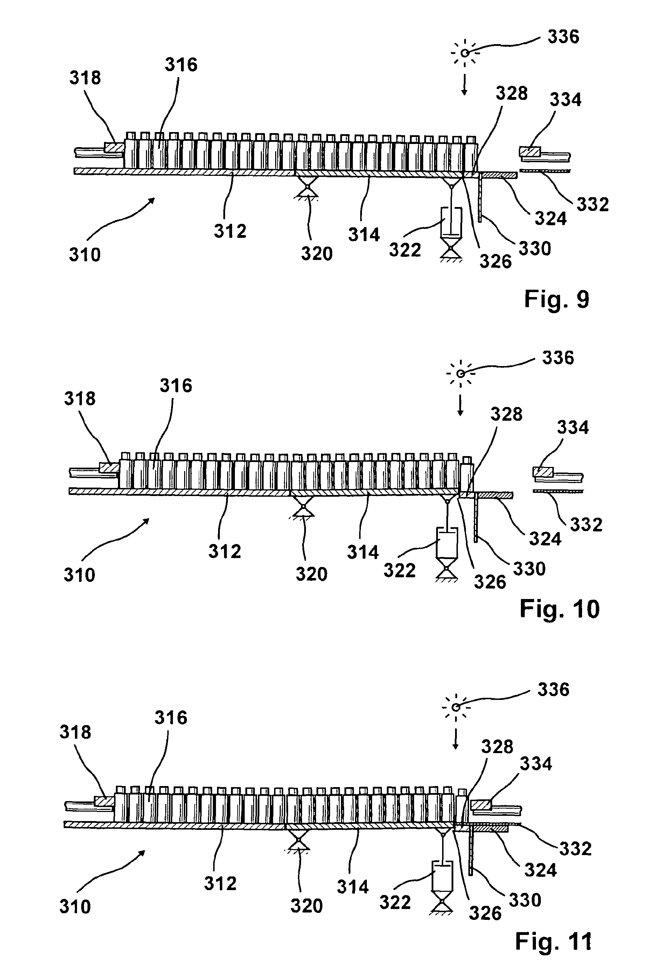

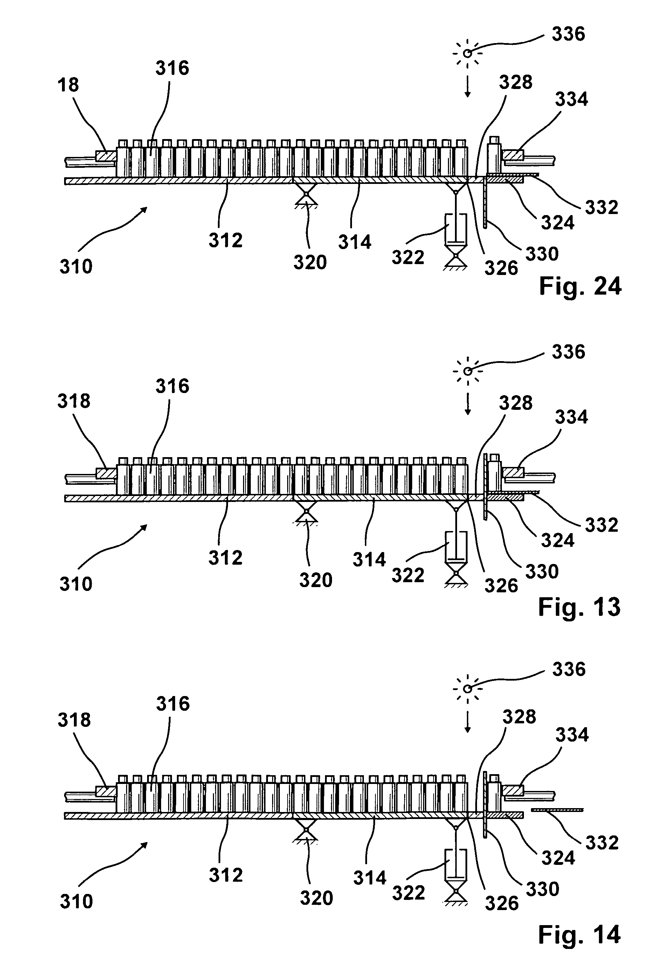

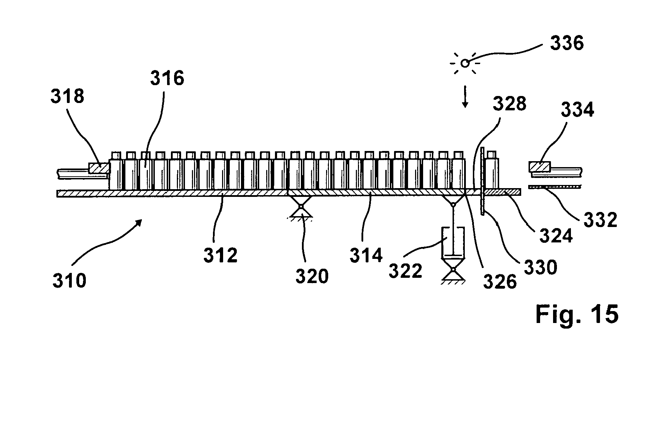

In den Fig. 9 bis 15 ist eine dritte Ausführungsform einer erfindungsgemäßen Vorrichtung zum kontrollierten Abführen einer Anzahl von Vials 316 nach dem Herausführen einer Gefriertrocknungsanlage dargestellt, wobei in allen 7 Figuren dieselbe Vorrichtung jeweils zu unterschiedlichen Zeitpunkten abgebildet ist. Diese Vorrichtung umfasst eine zweigeteilte Übergangsebene 310 mit einem starren Teil 312 und einem schwenkbar gelagerten Teil 314. Auf dieser Übergangsebene 310 können eine Anzahl von Vials 316 abgestellt werden, die mittels eines Entladeschiebers 318 aus einer Gefriertrocknungsanlage herausgeschoben werden. Das Teil 314 der Übergangsebene 310 ist mittels eines Gelenkes 320 und einem Hubkolben 322 schwenkbar gelagert. Dabei ist der Hubkolben 322 derart an einer einem Abförderband 324 zugewandten Kante 326 des Teils 314 der Übergangsebene 310 angeordnet, dass diese Kante 326 zirka 0,5 mm bis 20 mm, vorzugsweise 2 mm angehoben werden kann.

Zwischen der Übergangsebene 310 und dem Abförderband 324 ist eine Pufferfläche 328 vorgesehen, auf der genau eine Reihe von Vials 316 abgestellt werden kann. Die Übergangsebene 310 und die Pufferfläche 328 bilden eine einheitliche Oberfläche, so dass die aus dem Gefriertrockner kommenden Vials 316 problemlos bis auf die Pufferfläche 328 geschoben werden können.

Zwischen der Pufferfläche 328 und dem Abförderband 324 ist ein Schwert 330 vorgesehen, welches bis unter die Oberseite der Pufferfläche 328, beziehungsweise die Oberseite des Abförderbands 324 absenkbar ist. Dieses Schwert 330 kann bei Bedarf hochgefahren werden, um die auf dem Abförderband 324 abzustellenden Vials 316 gegen Umfallen zu sichern.

Darüber hinaus umfasst die erfindungsgemäße Vorrichtung noch ein sehr flach und dünn ausgeführtes Transportmittel 332 und einen Puscher 334. Das Transportmittel 332 kann an die erste Reihe der Vials 316, die auf der Pufferfläche 328 stehen, herangeführt werden und unter diese geschoben werden, so dass die erste Reihe der Vials 316 mittels des Transportmittels 332 auf das Abförderband 324 gebracht werden kann. Zum Absetzen der Vials 316 auf dem Abförderband 324 wird dann der Puscher 334 in Position gebracht, so dass das Transportmittel 332 die Vials 316 quasi gegen den Puscher abstreift, wodurch diese auf das Abförderband 324 gelangen. Einmal auf dem Abförderband 324 abgesetzt, werden die Vials 316 dann zur weiteren Bearbeitung abtransportiert.

Oberhalb der Übergabeebene 310 ist eine Lichtschranke 338 vorgesehen, die die erste Reihe der Vials 316 detektiert, sobald diese auf der Pufferfläche 328 angekommen ist. Der genaue Ablauf des kontrollierten Abführens der Vials wird nachfolgend detailliert beschrieben:

Die mit einem bestimmten Produktgut gefüllten Vials 316 werden in eine Gefriertrocknungsanlage geführt, um dort das Produktgut gefrier zu trocknen. Nach erfolgter Gefriertrocknung werden die Vials 316 in der Regel verschlossen und anschließend mittels eines Entladeschiebers 318 aus der Gefriertrocknungsanlage herausgeschoben. Dabei sind die Vials 316 fein säuberlich in Reihen aufgestellt und es ist dokumentiert, welches Vial 316 an welcher Position steht. Beim Verschieben der vielen Vials 316 aus der Gefriertrocknungsanlage auf eine Übergabeebene 310 bleibt die relative Position der Vials 316 zueinander erhalten. Sobald der Entladeschieber 318 diese Anzahl von Vials 316 so weit nach vorne geschoben hat, dass die vorderste Reihe der Vials 316 auf der Pufferfläche 328 angekommen ist, wird dieses durch die Lichtschranke 338 detektiert und es wird ein Signal an den Entladeschieber 318 gegeben, so dass dieser stoppt. Anschließend wird der Hubkolben 322 betätigt, um den Teil 314 der Übergabeebene um etwa 0,5 mm bis 20 mm, vorzugsweise 2 mm anzuheben. Somit ist die Kante 326 des Teils 314 der Übergabeebene 310 nunmehr angehoben und dient als Anschlag für die erste auf der Pufferfläche 328 abgestellte Reihe von Vials 316. Anschließend wird das flache Transportmittel 332 herangeführt und unter die erste Reihe von Vials 316 geschoben. Dabei wird ein Verrutschen der Vials 316 ausgeschlossen, da diese nunmehr an die Kante 328 anstoßen und nicht verrutschen können.

Sobald das Transportmittel 332 vollständig unter die erste Reihe der Vials 316 geführt ist, wird das Transportmittel 332 wieder zurückgezogen und nimmt dabei die erste Reihe der Vials 316 mit. Nachdem das Transportmittel 332 das Schwert 330 passiert hat, wird dieses hochgefahren und parallel dazu wird ein Puscher 334 von der anderen Seite her an die Vials 316 herangefahren. Wenn der Puscher 334 in Position ist, wird das Transportmittel 332 unter den Vials 316 weggezogen, so dass die Vials 316 auf das Abförderband 324 fallen. Bei dieser Bewegung kommen die Vials 316 schon mal ins Schwanken, können aber nicht umfallen, da einerseits das Schwert 330 und andererseits der Puscher 334 als Begrenzung dienen und ein Umfallen verhindern. Schließlich werden die auf dem Abförderband 324 befindlichen Vials 316 zur weiteren Verarbeitung abtransportiert.

Nun wird der Hubkolben 322 wieder eingefahren, so dass das Teil 314 der Übergabeebene 310 wieder bündig mit der Pufferfläche 328 ist. Jetzt kann der Entladeschieber 318 die auf der Übergabeebene 310 befindlichen Vials weiter nach vorne schieben, so lange, bis die vorderste Reihe der Vials 316 auf der Pufferfläche 328 ankommt, was wiederum durch die Lichtschranke 338 detektiert wird. Nun kann die nächste Reihe der auf der Pufferfläche 328 befindlichen Vials 316 in derselben Art und Weise abtransportiert werden.

Durch ein derartiges kontrolliertes Übergeben der Vials 316 von der Übergabeebene 310 auf das Abförderband 324 wird die Position der Vials 326 relativ zueinander erhalten, so dass die dann auf dem Abförderband 324 hintereinander angeordneten Vials 316 einer bestimmten Stelle in der Gefriertrocknungsanlage zugeordnet werden können, so dass hiermit eine optimale Dokumentation des Gefriertrocknungsvorgangs erreicht wird.

In einer anderen, hier nicht dargestellten Ausführungsform können auch zwei oder mehr Reihen von Vials auf einer entsprechend großen Pufferfläche platziert und vom Transportmittel transportiert werden.

Die hier beschriebenen Vorrichtungen können erfolgreich zum Separieren und zum kontrollierten Abführen von Vials einer beliebigen Stelle einer Vials Zuführ- und Abführanlage eingesetzt werden. Ihr Einsatz ist nicht beschränkt auf Vials, die gerade aus einer Gefriertrocknungs-anlage herausgefahren wurden.

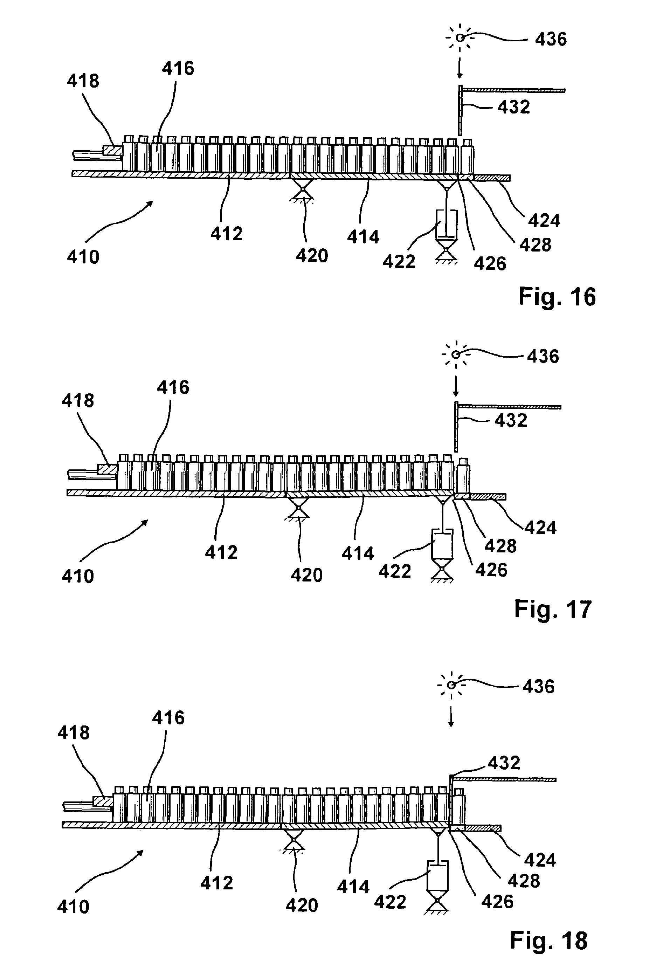

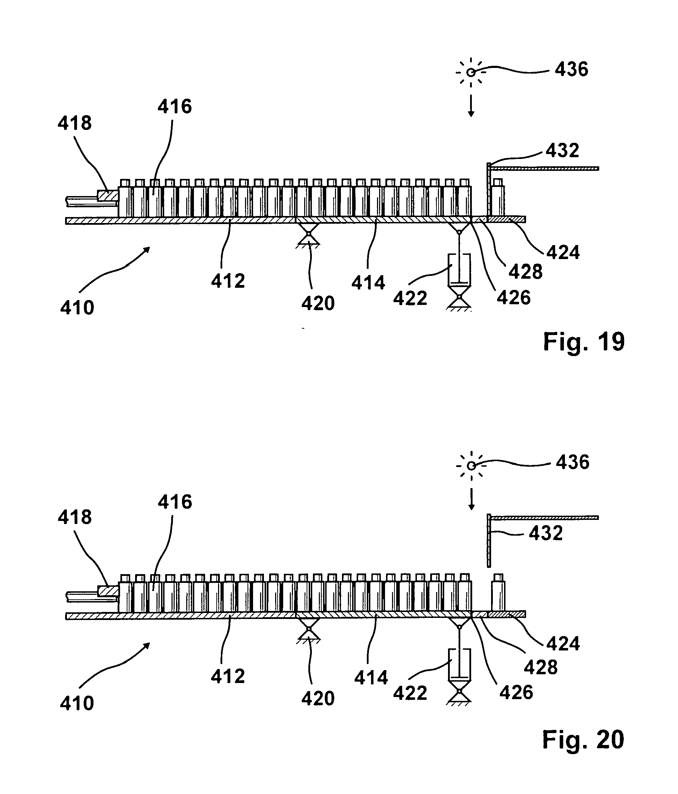

In den Fig. 16 bis 20 ist eine vierte Ausführungsform einer erfindungsgemäßen Vorrichtung zum Separieren einer Anzahl von Vials dargestellt, die eine zweigeteilte Übergangsebene 410 mit einem ersten, festen Teil 412 und einem zweiten, auf einem Gelenk 420 und einem Hubkolben 422 schwenkbar gelagerten Teil 414 umfasst. An die Übergabeebene 410 schließt sich eine Pufferfläche 428 und an die Pufferfläche 428 das Abförderband 424 an. Die Oberseite der Übergabeebene 410, der Pufferfläche 428 und des Abförderbandes 424 sind bündig miteinander ausgerichtet, so dass eine ebene Fläche entsteht.

Auch hier werden sämtliche Vials 416 von einem Entladeschieber 418 so weit auf die Übergabeebene 410 geschoben, bis eine erste Reihe von Vials 416 auf der Pufferfläche 428 zu Stehen kommt. Dies wird durch die Lichtschranke 436 detektiert, die den Entladeschieber 418 entsprechend stoppt. Anschließend wird der Teil 414 der Übergabeebene 410 durch Ausfahren des Hubkolbens 422 derart verschwenkt, dass eine Vorderkante 426 des Teils 410 um etwa 0,5 mm bis 20 mm, vorzugsweise 2 mm angehoben wird. Hierdurch werden die noch auf der Übergangsebene 410 befindlichen Vials 416 von den bereits auf der Pufferfläche befindlichen Vials 416 getrennt. Danach wird von oben ein Transportmittel 432 herangefahren, welches sich zwischen die auf der Übergabeebene 410 befindlichen Vials 416 und die auf der Pufferfläche 428 befindlichen Vials 416 schiebt, wie insbesondere Figur 18 zu entnehmen ist.

Anschließend zieht das Transportmittel 432 die separierten Vials 416 auf das Abförderband 424, so dass diese Vials 416 dann zur weiteren Bearbeitung abtransportiert werden können.

### Bezugszeichenliste:

| | | | | |
|---|---|---|---|---|
| 110 | 210 | 310 | 410 | Übergangsebene |
| 112 | 212 | 312 | 412 | Teil |
| 114 | | 314 | 414 | Teil |
| 116 | 216 | 316 | 416 | Vials |
| 118 | 218 | 318 | 418 | Entladeschieber |
| 120 | | 320 | 420 | Gelenk |
| 122 | | 322 | 422 | Hubkolben |
| 124 | 224 | 324 | 424 | Abförderband |
| 126 | 226 | 326 | 426 | Kante |
| 128 | | 328 | 428 | Pufferfläche |
| 130 | | 330 | | Schwert |
| 132 | | 332 | 432 | Transportmittel |
| 134 | | 334 | | Puscher |
| 136 | 236 | 336 | 438 | Lichtschranke |
| | 238 | | | Schwert |

## Patentansprüche

1. Verfahren zum Separieren einer Anzahl von Vials (116, 216, 316, 416) aus einer Vielzahl von in mehreren Reihen angeordneten Vials (116, 216, 316, 416), wobei die in mehreren Reihen angeordneten Vials (116, 216, 316, 416) zunächst auf eine Übergabeebene (110, 210, 310, 410) bewegt werden und dann derart weiter über die Übergabeebene (110, 210, 310, 410) hinaus bewegt werden, dass die zum Separieren vorgesehenen Vials (116, 216, 316, 416) über die Übergabeebene (110, 210, 310, 410) auf eine sich an die Übergabeebene (110, 210, 310, 410) anschließende Abstellfläche (124, 224, 328, 428) gelangen und dass die übrigen Vials (116, 216, 316, 416) auf der Übergabeebene (110, 210, 310, 410) verbleiben,
**dadurch gekennzeichnet,**
**dass** anschließend die noch auf der Übergabeebene (110, 210, 310, 410) befindlichen, aber an die Abstellfläche (124, 224, 328, 428) angrenzenden Vials (116, 216, 316, 416) derart angehoben werden oder dass die Abstellfläche (124, 224, 328, 428) derart abgesenkt wird, dass die auf der Übergabeebene (110, 210, 310, 410) verbleibenden Vials (116, 216, 316, 416) die Abstellfläche (124, 224, 328, 428) nicht mehr berühren.

2. Verfahren nach Anspruch 1,
**dadurch gekennzeichnet,**
**dass** die Vials (116, 216, 316, 416) um 0,5 mm bis 20 mm, vorzugsweise 2 mm angehoben werden oder dass die Abstellfläche um 0,5 mm bis 20 mm, vorzugsweise 2 mm abgesenkt wird.

3. Verfahren nach einem der vorangehenden Ansprüche,
**dadurch gekennzeichnet,**
**dass** die Vials (116, 216, 316, 416) reihenweise separiert werden.

4. Verfahren nach einem der vorangehenden Ansprüche,
**dadurch gekennzeichnet,**
**dass** die Abstellfläche eine Pufferfläche (328, 428) oder ein Abförderband (124, 224) sein kann.

5. Vorrichtung zum Separieren einer Anzahl von Vials aus einer Vielzahl von in mehreren Reihen angeordneten Vials, mit einer Übergabeebene (110, 310, 410) und mit einer Abstellfläche (124, 328, 428), auf der die separierten Vials (116, 316, 416) abstellbar sind,
**dadurch gekennzeichnet,**
**dass** die Übergabeebene (110, 310, 410) ganz oder teilweise derart schwenkbar oder anhebbar gelagert ist, dass eine der Abstellfläche (124, 328, 428) zugewandte Kante (136, 326, 436) der Übergabeebene (110, 310, 410) zwischen 0,5 mm und 20 mm, vorzugsweise 2 mm angehoben werden kann.

6. Vorrichtung zum Separieren einer Anzahl von Vials aus einer Vielzahl von in mehreren Reihen angeordneten Vials, mit einer Übergabeebene (210) und mit einer Abstellfläche (224), auf der die separierten Vials (216) abstellbar sind,
**dadurch gekennzeichnet,**
**dass** zwischen der Übergabeebene (210) und der Abstellfläche (224) eine Hebevorrichtung (238) ausgebildet ist, die die noch auf der Übergabeebene (210) befindlichen, aber an die Abstellfläche (224) angrenzenden Vials (216) bei Bedarf zumindest teilweise zwischen 0,5 mm und 20 mm, vorzugsweise 2 mm anhebt.

7. Vorrichtung nach Anspruch 6,
**dadurch gekennzeichnet,**
**dass** die Hebevorrichtung als ein vertikal verfahrbares Schwert (238) ausgebildet ist.

8. Vorrichtung nach einem der Ansprüche 5 bis 7,
**dadurch gekennzeichnet,**
**dass** die Abstellfläche als Pufferfläche (328, 428) oder als Abförderband (124, 224) zum Abtransport der separierten Vials (116, 216, 316, 416) ausgebildet ist.

9. Vorrichtung nach einem der Ansprüche 5 bis 8, mit einem Transportmittel (332, 432) zum Übersetzen der Vials auf das Abförderband (324, 424),
**dadurch gekennzeichnet,**
**dass** zwischen der Übergabeebene (310, 410) und dem Abförderband (324, 424) eine Pufferfläche (328, 428) vorgesehen ist, die so breit ausgebildet ist, dass mindestens eine Reihe von Vials (316, 416) darauf Platz findet.

10. Vorrichtung nach einem der Ansprüche 5 bis 8,
**dadurch gekennzeichnet,**
**dass** die Übergabeebene (110, 310, 410) zweigeteilt ausgeführt ist, wobei der an die Abstellfläche (124, 324, 424) angrenzende Teil (114, 314, 414) schwenkbar gelagert ist.

11. Vorrichtung nach wenigstens einem der vorangehenden Ansprüche,
**dadurch gekennzeichnet,**
**dass** oberhalb der Abstellfläche (124, 224, 328, 428) eine Lichtschranke (136, 236, 336, 436) angeordnet ist, um das Eintreffen der Vials (116, 216, 316, 416) zu detektieren.
